# EUROPÄISCHE PATENTSCHRIFT

(11) **EP 1 420 359 B1**
(45) Veröffentlichungstag und Bekanntmachung des Hinweises auf die Patenterteilung: **04.10.2006**
(21) Anmeldenummer: 03025770.3
(22) Anmeldetag: 11.11.2003
(51) Int. Cl.: G06K 9/00, G07C 9/00, G07F 7/10

(54) **Fingerabdrucksensor**
Fingerprint sensor
Capteur d'empreintes digitales

(30) Priorität: 15.11.2002 DE 10253286
(43) Veröffentlichungstag der Anmeldung: 19.05.2004
(73) Patentinhaber: Giesecke & Devrient GmbH, 81677 München (DE)
(72) Erfinder: Stephan, Elmar, 81371 München (DE); Müller, Robert, 81673 München (DE)
(74) Vertreter: Klunker . Schmitt-Nilson . Hirsch

(56) Entgegenhaltungen:
- EP-A- 0 994 439
- DE-A- 10 043 954
- DE-A- 19 648 767
- GB-A- 2 185 937
- US-B1- 6 307 956
- US-B1- 6 360 953
- MAINGUET J-F ET AL: "Fingerprint recognition based on silicon chips" FUTURE GENERATIONS COMPUTER SYSTEMS, ELSEVIER SCIENCE PUBLISHERS. AMSTERDAM, NL, Bd. 16, Nr. 4, Februar 2000 (2000-02), Seiten 403-415, XP004185852 ISSN: 0167-739X

## Beschreibung

Die Erfindung betrifft einen Fingerabdrucksensor.

Bei einem Fingerabdrucksensor wird ein Finger auf eine Sensorfläche aufgelegt und der Fingerabdruck des aufgelegten Fingers erfasst. Der erfasste Fingerabdruck kann weitergeleitet und ausgewertet werden und z.B. zur Identifizierung einer Person verwendet werden.

Falls der erfasste Fingerabdruck zur Identifizierung einer Person verwendet wird, ist es erforderlich, dass der erfasste Fingerabdruck mit einem zuvor erfassten und abgespeicherten Referenzfingerabdruck verglichen wird und ermittelt wird, ob der erfasste Fingerabdruck und der Referenzfingerabdruck gemäß vorbestimmten Kriterien übereinstimmen.

Zum Durchführen des Vergleichs sind zum Beispiel das Minutienverfahren und das Mustervergleichsverfahren oder pattern matching Verfahren bekannt oder ein kombiniertes Minutien-Mustervergleichsverfahren. Beim Minutienverfahren werden aus den Daten eines Fingerabdrucks charakteristische Daten, die sogenannten Minutien, nämlich Endpunkte und Kreuzungen von Fingerlinien, extrahiert. Nur diese charakteristischen Daten des erfassten Fingerabdrucks werden mit denen eines Referenzfingerabdrucks auf hinreichende Übereinstimmung verglichen. Beim Mustervergleichsverfahren wird aus den Daten eines Fingerabdrucks ein Muster konstruiert, durch das ein Modell des Fingerabdrucks gebildet ist. Das konstruierte Muster eines erfassten Fingerabdrucks wird mit dem eines Referenzfingerabdrucks auf Übereinstimmung verglichen (z.B. "On-line Fingerprint Verification", A. Jain, L. Hong, Michigan State University, East Lansing, MI 48824, USA, R. Bolle, IBM T.J. Watson Research Center, Yorktown Heights, NY 10598, USA, preprint 26.11.1996; {jain,honglin}@cps.msu.edu, bolle@watson.ibm.com).

Damit der Fingerabdruck zuverlässig erfasst wird, ist es erforderlich, dass der Finger mit der richtigen Ausrichtung und dem richtigen Anpressdruck auf die Sensorfläche aufgelegt wird. Eine falsche Ausrichtung oder ein falscher Anpressdruck kann hingegen zu einer Fehlfunktion des Fingerabdrucksensors führen. Dem Benutzer wird somit ein hohes Maß an Sorgfalt beim Ausrichten und Aufdrücken des Fingers auf die Sensorfläche abverlangt. Dadurch ist der Fingerabdrucksensor fehleranfällig, mühsam zu betreiben und nicht sehr zuverlässig.

Aus der DE 196 48 767 A1 ist ein Identifikationssystem mit einer elektronischen Chipkarte bekannt, die neben einer Speicher- und Vergleichslogik zwei Sensormatrizen aufweist, mit denen die Fingerabdrücke von Daumen und Zeigefinger erfasst werden. Der Vergleich der erfassten Fingerabdrücke mit jeweiligen Referenzwerten erfolgt auf der Chipkarte ohne Zwischenschaltung des Identifikationssystems. Das beschriebene Verfahren genügt aufgrund des Vergleiches zweier Fingerabdrücke mit den jeweiligen Referenzwerten hohen Sicherheitsanforderungen.

Die US 6,360,953 B1 beschreibt einen kontaktlosen Datenträger mit zwei Fingerabdrucksensoren. Zur Authentifizierung werden die erfaßten Fingerabdrücke mit den in einem Speicher auf dem Datenträger hinterlegten Referenzwerten verglichen und bei Übereinstimmung beider Fingerabdrücke ein Authentisierungssignal erzeugt.

Das Ziel der Erfindung ist es, einen Fingerabdrucksensor zu schaffen, der hohen Sicherheitsanforderungen genügt, aber auch für Anwendungen eingesetzt werden kann, die weniger hohe Sicherheitsstandards erfordern. Ziel ist ferner, ein entsprechendes Verfahren anzugeben.

Das Ziel wird erreicht durch einen Fingerabdrucksensor gemäß dem unabhängigen Vorrichtungs-Anspruch und durch ein Verfahren gemäß dem unabhängigen Verfahrens-Anspruch.

Vorteilhafte Ausgestaltungen der Erfindung sind in den abhängigen Ansprüchen angeführt.

Der Fingerabdrucksensor hat eine erste Sensorfläche und eine der ersten Sensorfläche gegenüberliegend angeordnete zweite Sensorfläche. Die erste und die zweite Sensorfläche sind in einem Winkel aus dem Winkelbereich von 135 bis 225 ° zueinander angeordnet, vorzugsweise in einem Winkel von 180 °. Um einen Fingerabdruck zu erfassen, wird der Fingerabdrucksensor mit zwei Fingern, z.B. mit dem Zeigefinger und dem Daumen derselben Hand oder mit dem Daumen und einem anderen Finger derselben Hand, ergriffen, so dass die erste Sensorfläche und die zweite Sensorfläche zwi schen den beiden Fingern zu liegen kommen. Dies erleichtert es dem Benutzer des Fingerabdrucksensors, den jeweiligen Finger auf der Sensorfläche richtig zu positionieren und mit dem richtigen Anpressdruck aufzudrücken. Dadurch ermöglicht der Fingerabdrucksensor eine einfache und zuverlässige Erfassung von Fingerabdrücken.

Der Fingerabdrucksensor weist weiter eine Weiterleiteinrichtung zum Weiterleiten eines erfassten Fingerabdrucks an eine Auswerteeinrichtung auf.

Die Auswerteeinrichtung kann vollständig in dem Fingerabdrucksensor selbst vorgesehen sein. In diesem Fall ist der Fingerabdrucksensor bei der Erfassung und Verarbeitung von Fingerabdrucksdaten autonom, als in sich abgeschlossene Einheit, betreibbar, im On-Card-Matching-Betrieb. Dieses On-Card-Matching hat den Vorteil, dass keine Übertragung von Fingerabdrucksdaten zwischen dem Fingerabdrucksensor und einem außerhalb des Fingerabdrucksensors gelegenen externen System erforderlich ist. Bei einer solchen Übertragung bestünde die Gefahr, dass übertragene unbefugt Daten abgehört werden.

Alternativ kann die Auswerteeinrichtung vollständig außerhalb des Fingerabdrucksensors vorgesehen sein, z.B. in einem Terminal oder in einer Computeranlage, das bzw. die mit dem Fingerabdrucksensor in Kommunikationsverbindung steht, oder teilweise im Fingerabdrucksensor und teilweise außerhalb des Fingerabdrucksensors vorgesehen sein.

Die Auswerteeinrichtung steht in Wirkverbindung mit einer mit weiterhin mindestens der ersten oder der zweiten Sensorfläche in Wirkverbindung stehende Extrahiereinrichtung zum Extrahieren charakteristischer Daten aus dem erfassten Fingerabdruck.

Die charakteristischen Daten sind so beschaffen, dass durch sie der zugehörige Fingerabdruck möglichst eindeutig gekennzeichnet ist.

Als charakterstische Daten können sämtliche mit der Sensorfläche erfassten Daten des erfassten Fingerabdrucks verwendet werden.

Vorzugsweise werden als charakteristische Daten nur ausgewählte Daten von den erfassten Daten verwendet.

Als charakteristische Daten können insbesondere die Daten des Linienmusters des erfassten Fingerabdrucks verwendet werden. Das Linienmuster eines Fingers verändert sich im Laufe des Lebens nicht. Daher sind die Daten des Linienmusters besonders geeignet als charakteristische Daten. Alternativ können als charakteristischen Daten einzelne charakteristische Punkte des erfassten Fingerabdrucks, wie zum Beispiel Endpunkte oder Schnittpunkte von Linien des Linienmusters des Fingerabdrucks, d.h. die Minutien, verwendet werden.

In der Auswerteeinrichtung werden die charakteristischen Daten des erfassten Fingerabdrucks ausgewertet.

Die Auswerteeinrichtung eine steht mit Speichereinrichtung zum Speichern charakteristischer Daten mindestens eines Referenzfingerabdrucks in Wirkverbindung.

Die charakteristischen Daten des Referenzfingerabdrucks können aus einem Referenzfingerabdruck gewonnen sein, der mit der ersten Sensorfläche oder der zweiten Sensorfläche erfasst worden ist, und anschließend in der Speichereinrichtung abgespeichert worden sein. Alternativ können die charakteristischen Daten des Referenzfingerabdrucks von außerhalb des Fingerabdrucksensors in die Speichereinrichtung eingespeist worden sein, z.B. aus einer externen Datenbank.

Die Auswerteeinrichtung weist weiter eine Verifizierungseinrichtung zum Verifizieren von erfassten Fingerabdrücken auf. Die Verifizierungseinrichtung weist eine mit der Speichereinrichtung und der Extrahiereinrichtung in Wirkverbindung stehende Vergleichseinrichtung auf. Die Vergleichseinrichtung ist zum Vergleichen der charakteristischen Daten eines erfassten Fingerabdrucks mit den charakteristischen Daten eines in der Speichereinrichtung abgespeicherten Referenzfingerabdrucks auf ihre gegenseitige Übereinstimmung vorgesehen. Der Vergleich auf Übereinstimmung wird vorzugsweise nach einem üblichen Vergleichsverfahren wie zum Beispiel dem Minutienverfahren oder dem Mustvergleichsverfahren (pattern matching Verfahren) oder einem kombinierten Minutien-Mustvergleichsverfahren durchgeführt.

Für jeden erfassten Fingerabdruck, der mit einem abgespeicherten Referenzfingerabdruck verglichen wird, ist von der Vergleichseinrichtung ein Vergleichs-Ausgabesignal ausgebbar, das zwei unterschiedliche Werte annehmen kann. Der Wert des Vergleichs-Ausgabesignals ist zustimmend, falls die gegenseitige Übereinstimmung zwischen den charakteristischen Daten des erfassten Fingerabdrucks und des Referenzfingerabdrucks vorbestimmten Übereinstimmungskriterien genügt. Genügt die Übereinstimmung diesen Übereinstimmungskriterien nicht, so ist das Vergleichs-Ausgabesignal ablehnend. Ein zustimmendes Vergleichs-Ausgabesignal bedeutet, dass die verglichenen Fingerabdrücke als übereinstimmend angesehen werden. Der erfasste Fingerabdruck ist in diesem Fall verifiziert worden. Ein ablehnendes Vergleichs-Ausgabesignal bedeutet hingegen, dass die beiden verglichenen Fingerabdrücke als nicht übereinstimmend angesehen werden. Der erfasste Fingerabdruck ist in diesem Fall nicht verifiziert worden.

Der Fingerabdrucksensor kann zur Identifizierung oder Authentifizierung (oder gleichbedeutend: Authentisierung) einer Person verwendet werden. Der Fingerabdrucksensor kann dazu zwei unterschiedliche Ausgestaltungen haben.

Gemäß einer ersten Ausgestaltung kann vorgesehen sein, dass, damit eine Person identifiziert oder authentifiziert wird, nur einer von zwei erfassten Fingerabdrücken verifiziert zu werden braucht. Dies ist z.B. vorteilhaft, falls eine Identifizierung oder Authentifizierung auch dann noch gewährleistet sein soll, wenn ein Finger der zu identifizierenden oder authentifizierenden Person so stark verletzt ist, dass durch die Verletzung das Lininenmuster des Fingers und damit auch die Minutien unkenntlich geworden sind. In diesem Fall wird eine Person als identifiziert oder authentifiziert angesehen werden, wenn von der Vergleichseinrichtung für zwei erfasste Fingerabdrücke mindestens ein zustimmendes Vergleichs-Ausgabesignal ausgegeben wird.

Alternativ, in einer zweiten Ausgestaltung, kann vorgesehen sein, dass eine Person, deren Fingerabdrücke erfasst werden, nur dann als identifiziert oder authentifiziert angesehen wird, wenn alle beide Fingerabdrücke von zwei erfassten Fingerabdrücken verifiziert werden. Dies bedeutet, dass die Person nur dann als identifiziert oder authentifiziert angesehen wird, wenn von der Vergleichseinrichtung zwei zustimmende Vergleichs-Ausgabesignale ausgegeben werden.

Der zweite Betriebsmodus bietet zwei Vorteile. Der erste Vorteil besteht darin, dass mit den beiden Sensorflächen und den beiden erfassten Fingerabdrücken eine größere Sicherheit erreicht wird, dass die Person richtig identifiziert oder authentifiziert worden ist, als mit einer einzelnen Sensorfläche der gleichen Größe. Der zweite Vorteil besteht darin, dass andererseits, um ein vorbestimmtes Maß an Sicherheit zu erreichen, dass die Person richtig identifiziert oder authentifiziert worden ist, bei zwei Sensorflächen bereits eine kleinere Fläche jeder einzelnen Sensorfläche genügt. Daher können, damit ein vorbestimmtes Maß an Identifizierungssicherheit erzielt wird, bei zwei ausgewerteten Sensorflächen Sensoren mit einer kleineren Fläche verwendet werden als wenn nur eine einzige Sensorfläche ausgewertet wird. Durch die verringerte Fläche der Sensorflächen ist einerseits der Fingerabdrucksensor platzsparender, da seine laterale Ausdehnung geringer ist. Andererseits sind die kleineren Sensorflächen weniger empfindlich gegenüber mechanischen Belastungen.

Vorzugsweise weist die Verifizierungseinrichtung eine Verifizierungs-Entscheidungseinheit auf, die ein zustimmendes Verifizierungs-Ausgabesignal ausgibt, wenn eine Person als identifiziert oder authentifiziert angesehen wird, und die ein ablehnendes Verifizierungs-Ausgabesignal ausgibt, wenn die Person als nicht identifiziert oder authentifiziert angesehen wird.

Falls zur Identifizierung oder Authentifizierung ein einziger verifizierter Fingerabdruck ausreicht, wird von der Verifizierungs-Entscheidungseinheit ein zustimmendes Verifizierungs-Ausgabesignal ausgegeben, falls mindestens ein Vergleichs-Ausgabesignal der Vergleichseinrichtung zustimmend ist. Falls für eine Identifizierung oder Authentifizierung einer Person zwei verifizierte Fingerabdrücke verlangt werden, wird von der Verifizierungs-Entscheidungseinheit nur dann ein zustimmendes Verifizierungs-Ausgabesignal ausgegeben, wenn die Vergleichs-Ausgabesignale zu beiden erfassten Fingerabdrücken zustimmend sind.

Die Speichereinrichtung zum Abspeichern von Referenzfingerabdrücken weist vorzugsweise einen ersten Speicher zum Speichern der charakteristischen Daten eines ersten Referenzfingerabdrucks und einen zweiten Speicher zum Speichern der charakteristischen Daten eines zweiten Referenzfingerabdrucks auf. In diesem Fall weist die Vergleichseinrichtung eine erste Vergleichseinheit zum Vergleichen des ersten erfassten Fingerabdrucks gegenüber dem ersten Referenzfingerabdruck und zum Ausgeben eines ersten Vergleichs-Ausgabesignals und eine zweite Vergleichseinheit zum Vergleichen des zweiten erfassten Fingerabdrucks gegenüber dem zweiten Referenzfingerabdruck und zum Ausgeben eines zweiten Vergleichs-Ausgabesignals auf. Die charakteristischen Daten eines mit der ersten Sensorfläche erfassten ersten Fingerabdrucks werden mit den charakteristischen Daten im ersten Speicher verglichen: Die charakteristischen Daten eines mit der zweiten Sensorfläche erfassten zweiten Fingerabdrucks werden mit den charakteristischen Daten im zweiten Speicher verglichen. In Abhängigkeit von der Ausgestaltung der Verifizierungs-Entscheidungseinheit werden zum Ermitteln des Verifizierungs-Ausgabesignals, d.h. um zu entscheiden, ob eine Person identifiziert ist oder nicht, entweder das erste und das zweite Ausgabesignal oder nur eines der beiden Vergleichs-Ausgabesignale verwendet.

Der Fingerabdrucksensor weist weiter eine Schalteinrichtung auf, mit der durch einen Benutzer festlegbar ist, ob das Verifizierungs-Ausgabesignal aus dem Vergleichs-Ausgabesignal nur eines Fingerabdrucks oder aus den Vergleichs-Ausgabesignalen beider Fingerabdrücke ermittelt wird. Damit kann ein Benutzer zwischen zwei Betriebsmodi des Fingerabdrucksensors schalten. Im ersten der beiden Betriebsmodi wird eine Person identifiziert, wenn mindestens einer von zwei erfassten Fingerabdrücken verifiziert wird. Im zweiten Betriebsmodus wird die Person nur dann identifiziert, wenn beide erfassten Fingerabdrücke verifiziert worden sind.

Vorzugsweise weist die Weiterleiteinrichtung ein zwischen der ersten Sensorfläche und der zweiten Sensorfläche angeordnetes Aktivierungselement auf, das mit der ersten Sensorfläche und der zweiten Sensorfläche derart in Wirkverbindung steht, dass durch eine gleichzeitige Betätigung, d.h. z.B. durch ein gleichzeitiges Drücken, der ersten und der zweiten Sensorfläche das Erfassen und Weiterleiten eines oder beider Fingerabdrücke bewirkt wird. Der Fingerabdrucksensor wird also bei dieser Ausführungsform erst dadurch aktiviert, dass er mit zwei Fingern betätigt wird.

Das Aktivierungselement kann z.B. ein Schließelement, insbesondere ein Schalter oder ein Relais, in einem elektrischen Stromkreis sein, der durch die gleichzeitige Betätigung der ersten und der zweiten Sensorfläche geschlossen wird.

Durch das Aktivierungselement können außerdem ein oder mehrere Elemente der Auswerteeinrichtung, insbesondere die Extrahiereinrichtung, die Verifizierungseinrichtung und die Auswahleinrichtung aktiviert werden, oder die gesamte Auswerteeinrichtung aktiviert werden.

Weiter kann die Weiterleiteinrichtung z.B. zumindest einen Teil eines internen Bussystems des Fingerabdrucksensors aufweisen.

Gemäß einer weiteren vorteilhaften Ausgestaltung des Fingerabdrucksensors weist der Fingerabdrucksensor eine Messeinrichtung zum Messen der elektrischen Leitfähigkeit zwischen einem auf die erste Sensorfläche aufgelegten ersten Finger und einem auf die zweite Sensorfläche aufgelegten zweiten Finger auf. Der mit der Messeinrichtung gemessene Wert der elektrischen Leitfähigkeit ist dazu geeignet, anzuzeigen, ob die aufgelegten Finger lebend sind.

Gemäß einer weiteren vorteilhaften Ausgestaltung weist der Fingerabdrucksensor ein in den Fingerabdrucksensor integriertes Display auf.

Das Display kann so eingerichtet sein, dass sich damit überprüfen lässt, ob die Finger richtig auf die Sensorflächen aufgelegt sind. Hierzu steht das Display vorzugsweise mit der Weiterleiteinrichtung derart in Wirkverbindung, dass auf dem Display mindestens ein erfasster Fingerabdruck anzeigbar ist, und vorzugsweise beide erfassten Fingerabdrücke anzeigbar sind.

Alternativ oder zusätzlich können auf dem Display charakteristische Daten mindestens eines erfassten Fingerabdrucks anzeigbar sein, wozu das Display in geeigneter Weise mit der Extrahiereinrichtung in Wirkverbindung steht. In diesem Fall wird z.B. nur das Linienmuster eines erfassten Fingerabdrucks oder werden nur die extrahierten Minutien auf dem Display angezeigt.

Alternativ oder zusätzlich können auch charakteristische Daten von in der Speichereinrichtung abgespeicherten Referenzfingerabdrücken auf dem Display anzeigbar sein.

Alternativ oder zusätzlich kann das Display so eingerichtet sein, dass auf dem Display anzeigbar ist, ob die Verifizierung eines erfassten Fingerabdrucks erfolgreich war. Dazu steht das Display vorzugsweise mit der Verifizierungseinrichtung derart in Wirkverbindung, dass auf dem Display entweder das Vergleichs-Ausgabesignal oder das Verifizierungs-Ausgabesignal oder beide Ausgabesignale anzeigbar sind.

Die erste und die zweite Sensorfläche können kapazitive Sensorflächen mit kapazitiven Sensorelementen sein. Alternativ können die erste und die zweite Sensorfläche optische Sensorflächen sein. Im zweiten Fall weisen die optischen Sensorflächen z.B. Licht empfangende Sensorelemente auf, die mit einer geeigneten Licht emittierenden Beleuchtungseinrichtung kombiniert sind. Alternativ können Kombinationen aus kapazitiven und optischen Sensorflächen vorgesehen sein.

Die erste und die zweite Sensorfläche können aus einem starren oder einem elastischen Material gefertigt sein, z.B. aus Glas oder Plexiglas oder aus PVC.

Bei einer bevorzugten Ausführungsform des Fingerabdrucksensors sind die erste und die zweite Sensorfläche aus einem elastischen Material wie z.B. PVC gefertigte kapazitive Sensorflächen mit kapazitiven Sensorelementen. Wenn der Fingerabdrucksensor betätigt wird, werden die erste und die zweite Sensorfläche leicht verformt und aufeinander zu bewegt. Dadurch wird ein zwischen den beiden Sensorflächen angeordneter Schalter geschlossen, wodurch der Fingerabdrucksensor an eine Stromversorgung angeschlossen wird und dadurch die Erfassung der Fingerabdrücke bewirkt wird.

In den Fingerabdrucksensor kann außerdem eine Spannungsquelle, z.B. eine Batterie, integriert sein. Die integrierte Spannungsquelle bietet den Vorteil, dass der Fingerabdrucksensor energetisch autonom betreibbar ist.

Zur Übertragung von Daten oder von Energie oder von Daten und Energie kann der Fingerabdrucksensor eine Kommunikationseinrichtung aufweisen. Die Kommunikationseinrichtung kann kontaktlos sein, z.B. eine Antenne, oder kontaktbehaftet, z.B. ein Kontaktfeld.

Falls die Auswerteeinrichtung zumindest teilweise außerhalb des Fingerabdrucksensors vorgesehen ist, lässt sich über die Kommunikationseinrichtung, in Verbindung mit der Weiterleiteinrichtung, ein erfasster Fingerabdruck an die Auswerteeinrichtung weiterleiten. Außerdem können, falls die Speichereinrichtung außerhalb des Fingerabdrucksensors vorgesehen ist, und dann insbesondere, falls die Vergleichseinrichtung im Fingerabdrucksensor vorgesehen ist, über die Kommunikationseinrichtung charakteristische Daten von Referenzfingerabdrücken in den Fingerabdrucksensor hereingeladen werden. Im Fingerabdrucksensor werden die charakteristischen Daten der Referenzfingerabdrücke z.B. über die Weiterleiteinrichtung weitergeleitet und z.B. mit charakteristischen Daten eines Referenzfingerabdrucks verglichen.

Der Fingerabdrucksensor weist einen Sensorkörper auf. Als Sensorkörper kann z.B. ein Chipkartenkörper vorgesehen sein. Alternativ kann der Sensorkörper die Gestalt eines Token-Gehäuses haben. Unter einem Token wird hierbei ein mit einem Gehäuse versehenes kompakt gestaltetes Bauteil verstanden, dessen Abmessungen nicht wesentlich größer sind, als es erforderlich ist, um die beiden Sensorflächen und gegebenenfalls weitere Elemente unterzubringen. Zu den weiteren Elementen können z.B. die Auswerteeinrichtung oder Teile davon, die Spannungsquelle oder Batterie, ein Display oder eine Schnittstelle zum Anschluss des Tokens an eine Datenverarbeitungseinrichtung zählen.

Der Fingerabdrucksensor kann außerdem einen Anschluss zum Anschließen des Fingerabdrucksensors an eine Schnittstelle einer Datenverarbeitungseinrichtung aufweisen. Der Anschluss kann z.B. ein USB-Anschluss oder ein serieller oder ein paralleler oder ein ähnlicher Anschluss sein.

In den Fingerabdrucksensor können weitere Elemente integriert sein. Bei einem als Chipkarte gestalteten Fingerabdrucksensor kann z.B. die Chipkarte für eine Chipkarte übliche Funktionen aufweisen. Solche übliche Funktionen können z.B. Zahlungsverkehrfunktionen oder Signaturfunktionen oder Speicherfunktionen sein.

Im Folgenden wird die Erfindung anhand einer beispielhaften Ausführungsform, die in den Figuren dargestellt ist, näher erläutert. In den Figuren zeigen:
- Fig. 1: ein schematisches Blockschaltbild eines erfindungsgemäßen Fingerabdrucksensors, der in eine Chipkarte integriert ist;
- Fig. 2: eine Seitenansicht eines erfindungsgemäßen Fingerabdruck-Sensors mit zwei gegenüber liegend angeordneten Sensorflächen, wobei auf jede Sensorfläche ein Finger aufgelegt ist.

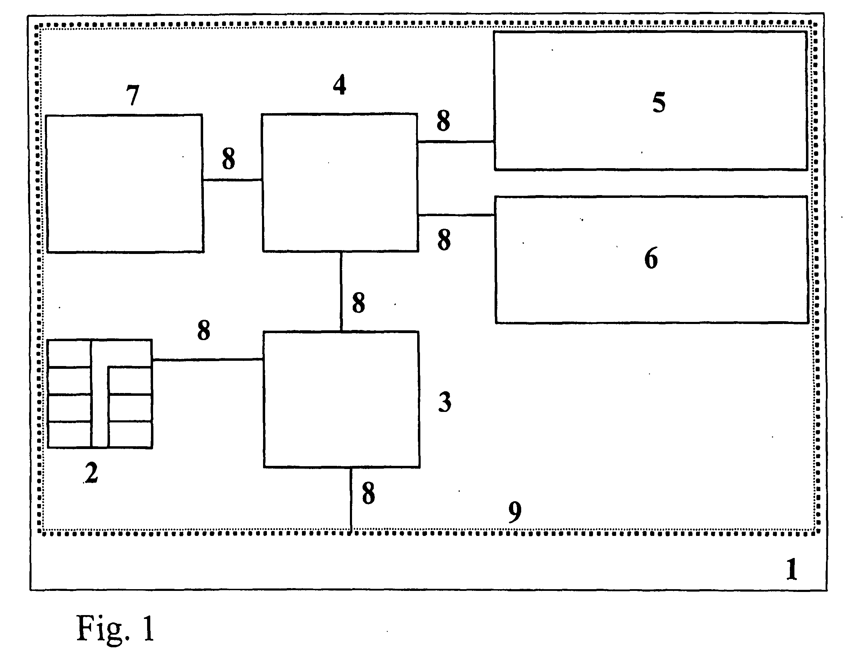

Fig. 1 zeigt eine schematische Blockschaltbild-Darstellung eines erfindungsgemäßen Fingerabdrucksensors, der in Form einer Chipkarte ausgestaltet ist.

Der Fingerabdrucksensor weist einen als Chipkartenkörper ausgebildeten Sensorkörper 1 auf.

In den Sensorkörper 1 sind Kontaktfelder 2 und eine Antenne 9 als Kommunikationseinrichtungen für die Datenübertragung integriert. Die Kontaktfelder 2 und die Antenne 9 sind über einen internen Bus 8 mit einem Chipkartenschaltkreis 3 verbunden, mit dem die Kontaktfelder 2 und die Antenne 9 betrieben werden. Der interne Bus 8 stellt einen Teil der Weiterleiteinrichtung dar. Der Chipkartenschaltkreis 3 ist über den internen Bus 8 mit einer CPU (Central Processing Unit) 4 verbunden, die ebenfalls in den Sensorkörper 1 integriert ist. Die CPU 4 weist einen Mikroprozessor und einen Speicher zum Abspeichern charakteristischer Daten von Referenzfingerabdrükken auf. Der Chipkartenschaltkreis 3 und die CPU 4 stellen Teile der Auswerteeinheit dar.

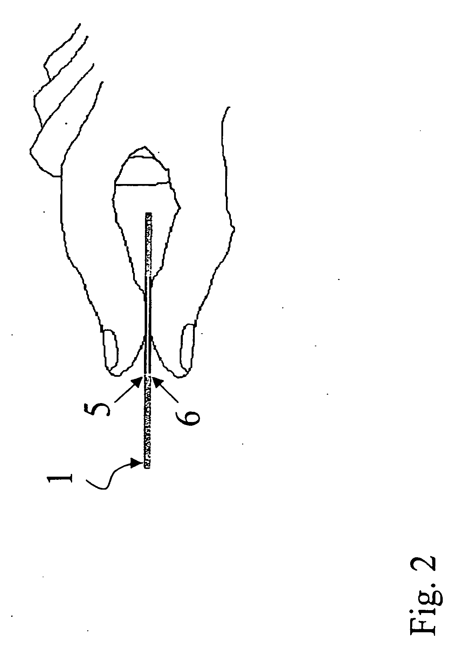

Weiter ist in den Sensorkörper 1 eine Batterie 7 integriert. Die Batterie 7 ist mit der CPU 4 elektrisch gekoppelt. In den Sensorkörper 1 sind weiter eine erste Sensorfläche 5 und eine zweite Sensorfläche 6 integriert. In der schematischen Blockschaltbild-Darstellung der Fig. 1 sind die erste Sensorfläche 5 und die zweite Sensorfläche 6 nebeneinander dargestellt. Tatsächlich ist, wie in Fig. 2 dargestellt, die eine der beiden Sensorflächen 5, 6 an der Oberseite des Sensorkörpers 1 angeordnet und ist die andere der beiden Sensorflächen 5, 6 an der Unterseite des Sensorkörpers 1 angeordnet. In einer wirklichkeitsgetreuen Aufsichts-Darstellung wären die erste Sensorfläche 5 und die zweite Sensorfläche 6 in der Regel im wesentlichen deckungsgleich übereinander angeordnet, so dass nur eine der beiden Sensorflächen 5, 6 zu sehen wäre. Die erste Sensorfläche 5 und die zweite Sensorfläche 6 sind über den internen Bus 8 der Chipkarte mit der CPU 4 gekoppelt.

Fig. 2 zeigt einen erfindungsgemäßen Fingerabdrucksensor, der zwischen zwei Fingern gehalten ist, so dass von einem ersten der beiden Finger ein erster Fingerabdruck erfasst wird und vom zweiten der beiden Finger ein zweiter Fingerabdruck erfasst wird. Die erste Sensorfläche 5 und die zweite Sensorfläche 6 sind deckungsgleich zueinander an der Oberseite und an der Unterseite des Sensorkörpers 1 angeordnet. Die erste Sensorfläche 5 und die zweite Sensorfläche 6 können alternativ auch leicht versetzt zueinander angeordnet sein, so dass sie nur teilweise überlappen.

Im Folgenden wird das erfindungsgemäße Verfahren zum Erfassen und Verarbeiten mindestens eines Fingerabdrucks mit dem erfindungsgemäßen Fingerabdrucksensor beschrieben.

Der Fingerabdrucksensor wird so, wie in Fig. 2 dargestellt, zwischen zwei Finger genommen. In Fig. 2 sind dies der Zeigefinger und der Daumen ein und derselben Hand. Dadurch wird der Zeigefinger auf die erste Sensorfläche 5 aufgelegt und der Daumen auf die zweite Sensorfläche 6 aufgelegt. Der Daumen und der Zeigefinger werden leicht zusammengepresst, so dass die erste Sensorfläche 5 und die zweite Sensorfläche 6 aufeinander zubewegt werden. Dadurch wird ein Schalter in einem elektrischen Stromkreis geschlossen, so dass die Batterie 7 an die CPU 4 und an beiden Sensorflächen 5, 6 elektrisch angekoppelt wird, wodurch ein erster Fingerabdruck des Zeigefingers und ein zweiter Fingerabdruck des Daumens erfasst werden. Der erfasste erste Fingerabdruck und der erfasste zweite Fingerabdruck werden über den internen Bus 8 an die CPU 4 weitergeleitet. Die CPU 4 weist einen Mikroprozessor auf, der als Auswerteeinrichtung verwendet wird. In dem Mikroprozessor werden in einer Extrahiereinheit charakteristische Daten jedes weitergeleiteten erfassten Fingerabdrucks extrahiert. In einer Speichereinrichtung der CPU 4 sind in einer ersten Speichereinheit charakteristische Daten eines ersten Fingers als erster Referenzfingerabdruck abgespeichert. Die charakteristischen Daten des ersten erfassten Fingerabdrucks werden in einer Vergleichseinheit des Mikroprozessors mit den charakteristischen Daten des ersten Referenzfingerabdrucks verglichen. Falls der Vergleich ergibt, dass die charakteristischen Daten des erfassten Fingerabdrucks hinreichend mit den charakteristischen Daten des Referenzfingerabdrucks übereinstimmen, wird von dem Mikroprozessor ein zustimmendes Vergleichs-Ausgabesignal ausgegeben, durch das anzeigt wird, dass der erste Fingerabdruck verifiziert worden ist. In analoger Weise werden die charakteristischen Daten des zweiten erfassten Fingerabdrucks mit in einer zweiten Speichereinheit der Speichereinrichtung der CPU abgespeicherten charakteristischen Daten eines zweiten Referenzfingerabdrucks verglichen. Falls die charakteristischen Daten des zweiten erfassten Fingerabdrucks hinreichend mit den charakteristischen Daten des zweiten Referenzfingerabdrucks übereinstimmen, wird von dem Mikroprozessor für den zweiten Fingerabdruck ein zustimmendes Vergleichs-Ausgabesignal ausgegeben, durch das anzeigt wird, dass der zweite Fingerabdruck verifiziert worden ist. Falls beide Vergleichs-Ausgabesignale zustimmend sind, d.h. falls beide Fingerabdrücke verifiziert worden sind, wird von dem Mikroprozessor ein positives Verifizierungs-Ausgabesignal ausgegeben. Das positive Verifizierungs-Ausgabesignal besagt, dass die Person, die zu den beiden aufgelegten Finger gehört, als die Person identifiziert worden ist, deren Fingerabdrücke in der Speichereinrichtung abgespeichert sind.

## Patentansprüche

1. Fingerabdrucksensor mit einem Sensorkörper (1), mit einer ersten Sensorfläche (5) zum Erfassen eines ersten Fingerabdrucks und mit einer zweiten Sensorfläche (6) zum Erfassen eines zweiten Fingerabdrucks, wobei die erste Sensorfläche (5) und die zweite Sensorfläche (6) in einem Winkel aus dem Winkelbereich von 135 bis 225 ° zueinander angeordnet sind, mit einer mit mindestens der ersten oder der zweiten Sensorfläche (5, 6) in Wirkverbindung stehenden Weiterleiteinrichtung (8) zum Weiterleiten mindestens eines erfassten Fingerabdrucks zumindest an eine Auswerteeinrichtung (3, 4) zur Auswertung des erfassten Fingerabdrucks, die eine Verifizierungseinrichtung zum Verifizieren mindestens des ersten oder des zweiten Fingerabdrucks aufweist, wobei die Verifizierungseinrichtung eine mit einer Speichereinrichtung und einer Extrahiereinrichtung in Wirkverbindung stehende Vergleichseinrichtung aufweist, die zum Vergleichen charakteristischer Daten mindestens eines erfassten Fingerabdrucks mit charakteristischen Daten eines in der Speichereinrichtung abgespeicherten Referenzfingerabdrucks auf ihre gegenseitige Übereinstimmung vorgesehen ist und von der mindestens ein Vergleichs-Ausgabesignal ausgebbar ist, wobei die Verifizierungseinrichtung weiter eine Verifizierungs-Entscheidungseinheit aufweist, von der in Abhängigkeit vom Wert mindestens eines Vergleichs-Ausgabesignals ein Verifizierungs-Ausgabesignal ermittelbar und ausgebbar ist, das zwei unterschiedliche Werte, nämlich zustimmend und ablehnend, annehmen kann, **dadurch gekennzeichnet, dass** er weiter eine Schalteinrichtung aufweist, mit der durch einen Benutzer festlegbar ist, in welcher Weise das Verifizierungs-Ausgabesignal aus Vergleichs-Ausgabesignalen des ersten und des zweiten erfassten Fingerabdrucks ermittelt werden soll und dass er so ausgestaltet ist, dass Vergleichs-Ausgabesignale beider Fingerabdrücke erzeugt werden, wenn die Schalteinrichtung die Notwendigkeit beide Signale festlegt.

2. Fingerabdrucksensor nach Anspruch 1, **dadurch gekennzeichnet, dass** der Wert des Vergleichs-Ausgabesignals zustimmend ist, falls die gegenseitige Übereinstimmung vorbestimmten Übereinstimmungskriterien genügt, und andernfalls ablehnend ist.

3. Fingerabdrucksensor nach einem der vorhergehenden Ansprüche, **dadurch gekennzeichnet, dass** der Winkel 180° ist.

4. Fingerabdrucksensor nach einem der vorhergehenden Ansprüche, **dadurch gekennzeichnet, dass** die Speichereinrichtung aufweist:
- einen ersten Speicher zum Speichern charakteristischer Daten eines ersten Referenzfingerabdrucks und
- einen zweiten Speicher zum Speichern charakteristischer Daten eines zweiten Referenzfingerabdrucks,
und wobei die Vergleichseinrichtung aufweist:
- eine erste Vergleichseinheit zum Vergleichen der charakteristischen Daten des ersten erfassten Fingerabdrucks gegenüber denjenigen des ersten Referenzfingerabdrucks und zum Ausgeben eines ersten Vergleichs-Ausgabesignals und
- eine zweite Vergleichseinheit zum Vergleichen der charakteristischen Daten des zweiten erfassten Fingerabdrucks gegenüber denjenigen des zweiten Referenzfingerabdrucks und zum Ausgeben eines zweiten Vergleichs-Ausgabesignals.

5. Fingerabdrucksensor nach einem der vorhergehenden Ansprüche, **dadurch gekennzeichnet, dass** die Weiterleiteinrichtung (8) ein zwischen der ersten Sensorfläche (5) und der zweiten Sensorfläche (6) angeordnetes Aktivierungselement aufweist, das mit der ersten Sensorfläche (5) und der zweiten Sensorfläche (6) derart in Wirkverbindung steht, dass durch eine gleichzeitige Betätigung, insbesondere ein gleichzeitiges Drücken, der ersten und der zweiten Sensorfläche (5, 6) das Erfassen und Weiterleiten des mindestens einen Fingerabdrucks bewirkt wird.

6. Fingerabdrucksensor nach einem der vorhergehenden Ansprüche, **dadurch gekennzeichnet, dass** das Aktivierungselement ein Schließelement in einem elektrischen Stromkreis ist, der durch die gleichzeitige Betätigung der ersten und der zweiten Sensorfläche (5, 6) geschlossen wird.

7. Fingerabdrucksensor nach einem der vorhergehenden Ansprüche, **dadurch gekennzeichnet, dass** durch das Aktivierungselement mindestens eines der Elemente der Auswerteeinrichtung, insbesondere die Extrahiereinrichtung, die Verifizierungseinrichtung oder die Auswahleinrichtung, aktiviert wird.

8. Fingerabdrucksensor nach einem der vorhergehenden Ansprüche, **dadurch gekennzeichnet, dass** er weiter eine Messeinrichtung zum Messen der elektrischen Leitfähigkeit zwischen einem auf die erste Sensorfläche (5) aufgelegten ersten Finger und einem auf die zweite Sensorfläche (6) aufgelegten zweiten Finger aufweist.

9. Fingerabdrucksensor nach einem der vorhergehenden Ansprüche, **dadurch gekennzeichnet, dass** er weiter ein in den Fingerabdrucksensor integriertes Display aufweist.

10. Fingerabdrucksensor nach einem der vorhergehenden Ansprüche, **dadurch gekennzeichnet, dass** das Display mit der Weiterleiteinrichtung (8) derart in Wirkverbindung steht, dass auf dem Display mindestens ein erfasster Fingerabdruck anzeigbar ist.

11. Fingerabdrucksensor nach einem der vorhergehenden Ansprüche, **dadurch gekennzeichnet, dass** das Display mit der Extrahiereinrichtung derart in Wirkverbindung steht, dass auf dem Display charakteristische Daten mindestens eines erfassten Fingerabdrucks anzeigbar sind.

12. Fingerabdrucksensor nach einem der vorhergehenden Ansprüche, **dadurch gekennzeichnet, dass** das Display mit der Verifizierungseinrichtung derart in Wirkverbindung steht, dass auf dem Display mindestens ein Signal von dem mindestens einen Vergleichs-Ausgabesignal und dem Verifizierungs-Ausgabesignal anzeigbar ist.

13. Fingerabdrucksensor nach einem der vorhergehenden Ansprüche, **dadurch gekennzeichnet, dass** mindestens eine Sensorfläche (5, 6) der ersten und zweiten Sensorflächen (5, 6) eine kapazitive Sensorfläche mit kapazitiven Sensorelementen ist.

14. Fingerabdrucksensor nach einem der vorhergehenden Ansprüche, **dadurch gekennzeichnet, dass** mindestens eine Sensorfläche (5, 6) der ersten und zweiten Sensorflächen (5, 6) eine optische Sensorfläche, insbesondere mit einer Licht emittierenden Beleuchtungseinrichtung und mit Licht empfangenden Sensorelementen, ist.

15. Fingerabdrucksensor nach einem der vorhergehenden Ansprüche, **dadurch gekennzeichnet, dass** er weiter eine in den Fingerabdrucksensor integrierte Spannungsquelle (7) aufweist.

16. Fingerabdrucksensor nach einem der vorhergehenden Ansprüche, **dadurch gekennzeichnet, dass** die Spannungsquelle (7) an mindestens eines der folgenden Elemente elektrisch ankoppelbar ist: die erste Sensorfläche (5), die zweite Sensorfläche (6), die Auswerteeinrichtung (3, 4) und die einzelnen Elemente der Auswerteeinrichtung (3, 4), insbesondere die Extrahiereinrichtung, die Verifizierungseinrichtung und die Auswahleinrichtung.

17. Fingerabdrucksensor nach einem der vorhergehenden Ansprüche, **dadurch gekennzeichnet, dass** er weiter mindestens eine in den Fingerabdrucksensor (5, 6) integrierte Kommunikationseinrichtung (2, 9) aufweist.

18. Fingerabdrucksensor nach einem der vorhergehenden Ansprüche, **dadurch gekennzeichnet, dass** er als Kommunikationseinrichtung (2, 9) eine Antenne (9) für kontaktlose Kommunikation aufweist.

19. Fingerabdrucksensor nach einem der vorhergehenden Ansprüche, **dadurch gekennzeichnet, dass** er als Kommunikationseinrichtung (2, 9) ein Kontaktfeld (2) für kontaktbehaftete Kommunikation aufweist.

20. Fingerabdrucksensor nach einem der vorhergehenden Ansprüche, mit einem Anschluss zum Anschließen des Fingerabdrucksensors an eine Schnittstelle einer Datenverarbeitungseinrichtung.

21. Fingerabdrucksensor nach einem der vorhergehenden Ansprüche, **dadurch gekennzeichnet, dass** der Sensorkörper (1) ein Chipkarten-Körper ist.

22. Verfahren zum Erfassen und Verarbeiten mindestens eines Fingerabdrucks mit einem Fingerabdrucksensor, bei dem mittels einer ersten Sensorfläche (5) ein erster Fingerabdruck eines ersten Fingers erfasst wird und mittels einer zweiten Sensorfläche (6) ein zweiter Fingerabdruck eines zweiten Fingers erfasst wird, wobei die erste Sensorfläche (5) und die zweite Sensorfläche (6) in einem Winkel aus dem Winkelbereich von 135 bis 225 ° zueinander angeordnet sind, und der erfasste erste Fingerabdruck und der erfasste zweite Fingerabdruck mittels einer Weiterleiteinrichtung (8) an eine Auswerteeinrichtung (3, 4) weitergeleitet werden und in der Auswerteeinheit (3, 4) charakteristische Daten des jeweiligen weitergeleiteten erfassten Fingerabdrucks extrahiert werden, dass weiter in einer Verifizierungseinheit der Auswerteeinrichtung (3, 4), jeweils für den ersten und den zweiten erfassten Fingerabdruck, die charakteristischen Daten des erfassten Fingerabdrucks mit in einem Speicher der Auswerteeinrichtung abgespeicherten charakteristischen Daten eines dem erfassten Fingerabdruck zugeordneten Referenzfingerabdrucks verglichen werden und, falls der Vergleich ergibt, dass die charakteristischen Daten des erfassten Fingerabdrucks gemäß vorbestimmten Übereinstimmungskriterien mit den charakteristischen Daten des Referenzfingerabdrucks übereinstimmen, von der Auswerteeinrichtung ein zustimmendes Vergleichs-Ausgabesignal ausgegeben wird und andernfalls von der Auswerteeinrichtung ein ablehnendes Vergleichs-Ausgabesignal ausgegeben wird, und dass von der Verifizierungseinheit ein Verifizierungs-Ausgabesignal ausgegeben wird, **dadurch gekennzeichnet, daß** in einer Schalteinrichtung des Fingerabdrucksensors durch einen Benutzer festgelegt wird, in welcher Weise das Verifizierungs-Ausgabesignal aus Vergleichs-Ausgabesignalen des ersten und des zweiten erfaßten Fingerabdrucks ermittelt wird und wobei das Verfahren so ausgestaltet ist, dass Vergleichs-Ausgabesignale beider Fingerabdrücke erzeugt werden, wenn die Schalteinrichtung die Notwendigkeit beide Signale festlegt.

23. Verfahren nach Anspruch 22, **dadurch gekennzeichnet, dass**, falls mindestens ein Vergleichs-Ausgabesignal zustimmend ist, von der Verifizierungseinheit ein zustimmendes Verifizierungs-Ausgabesignal ausgegeben wird.

24. Verfahren nach Anspruch 22 oder 23, **dadurch gekennzeichnet, dass** von der Verifizierungseinheit nur in dem Fall ein zustimmendes Verifizierungs-Ausgabesignal ausgegeben wird, wenn beide Vergleichs-Ausgabesignale zustimmend sind.

25. Verfahren nach einem der vorhergehenden Ansprüche, **dadurch gekennzeichnet, dass** der Vergleich zumindest teilweise nach dem Mustervergleichsverfahren durchgeführt wird.

26. Verfahren nach einem der vorhergehenden Ansprüche, **dadurch gekennzeichnet, dass** der Vergleich zumindest teilweise nach dem Minutienverfahren durchgeführt wird.

27. Verfahren nach einem der vorhergehenden Ansprüche, **dadurch gekennzeichnet, daß** der Winkel 180° ist.

28. Verfahren nach einem der vorhergehenden Ansprüche, **dadurch gekennzeichnet, dass** das Erfassen des ersten und des zweiten Fingerabdrucks **dadurch** bewirkt wird, dass der erste Finger auf die erste Sensorfläche (5) aufgelegt wird, der zweite Finger auf die zweite Sensorfläche (6) aufgelegt wird, und mit dem ersten und dem zweiten Finger die erste und die zweite Sensorfläche (5, 6) mit einem solchen Anpressdruck gedrückt werden, dass ein zwischen der ersten Sensorfläche (5) und der zweiten Sensorfläche (6) angeordnetes Aktivierungselement dahingehend aktiviert wird, dass mit der ersten Sensorfläche (5) ein erster Fingerabdruck des ersten Fingers erfasst wird und mit der zweiten Sensorfläche (6) ein zweiter Fingerabdruck des zweiten Fingers erfasst wird.

29. Verfahren nach einem der vorhergehenden Ansprüche, **dadurch gekennzeichnet, dass** als Prüfung, ob die Finger lebend sind, die elektrische Leitfähigkeit zwischen dem ersten Finger und dem zweiten Finger, die über die erste und die zweite Sensorfläche (5, 6) miteinander elektrisch gekoppelt sind, gemessen wird.

30. Verwendung des Verfahrens nach einem Ansprüche 22 bis 29 zur Identifizierung einer Person anhand mindestens eines ihrer Fingerabdrücke.

## Claims

1. A fingerprint sensor with a sensor body (1), with a first sensor area (5) for detecting a first fingerprint and with a second sensor area (6) for detecting a second fingerprint, the first sensor area (5) and the second sensor area (6) being disposed at an angle from the angular range from 135 to 225° relative to each other, with a relaying device (8) in operative connection with at least the first or second sensor area (5, 6) for relaying at least one detected fingerprint at least to an evaluation device (3, 4) for evaluating the detected fingerprint, which has a verification device for verifying at least the first or second fingerprint, the verification device having a comparing device in operative connection with a memory device and an extracting device, which is provided for comparing characteristic data of at least one detected fingerprint with characteristic data of a reference fingerprint stored in the memory device as to a mutual match, and which is adapted to output at least one comparison output signal, the verification device further having a verification decision unit which is adapted to determine and output, in dependence on the value of at least one comparison output signal, a verification output signal which can assume two different values, namely affirmative and negative, **characterized in that** it further has a switching device with which a user can specify in what way the verification output signal is to be determined from comparison output signals of the first and second detected fingerprints, and it is so designed that comparison output signals of both fingerprints are produced when the switching device specifies the necessity of both signals.

2. The fingerprint sensor according to claim 1, **characterized in that** the value of the comparison output signal is affirmative if the mutual match meets predetermined match criteria, and is otherwise negative.

3. The fingerprint sensor according to any of the previous claims, **characterized in that** the angle is 180°.

4. The fingerprint sensor according to any of the previous claims, **characterized in that** the memory device has:
- a first memory for storing characteristic data of a first reference fingerprint, and
- a second memory for storing characteristic data of a second reference fingerprint,
and the comparing device having:
- a first comparing unit for comparing the characteristic data of the first detected fingerprint with those of the first reference fingerprint and for outputting a first comparison output signal, and
- a second comparing unit for comparing the characteristic data of the second detected fingerprint with those of the second reference fingerprint and for outputting a second comparison output signal.

5. The fingerprint sensor according to any of the previous claims, **characterized in that** the relaying device (8) has an activation element disposed between the first sensor area (5) and the second sensor area (6) and in operative connection with the first sensor area (5) and the second sensor area (6) in such a way that simultaneous actuation, in particular simultaneous pressing, of the first and second sensor areas (5, 6) causes detection and relaying of the at least one fingerprint.

6. The fingerprint sensor according to any of the previous claims, **characterized in that** the activation element is a closing element in an electrical circuit, the latter being closed by simultaneous actuation of the first and second sensor areas (5, 6).

7. The fingerprint sensor according to any of the previous claims, **characterized in that** the activation element activates at least one of the elements of the evaluation device, in particular the extracting device, the verification device or the selection device.

8. The fingerprint sensor according to any of the previous claims, **characterized in that** it further has a measuring device for measuring the electrical conductivity between a first finger placed on the first sensor area (5) and a second finger placed on the second sensor area (6).

9. The fingerprint sensor according to any of the previous claims, **characterized in that** it further has a display integrated into the fingerprint sensor.

10. The fingerprint sensor according to any of the previous claims, **characterized in that** the display is in operative connection with the relaying device (8) in such a way that at least one detected fingerprint is displayable on the display.

11. The fingerprint sensor according to any of the previous claims, **characterized in that** the display is in operative connection with the extracting device in such a way that characteristic data of at least one detected fingerprint are displayable on the display.

12. The fingerprint sensor according to any of the previous claims, **characterized in that** the display is in operative connection with the verification device in such a way that at least one signal of the at least one comparison output signal and the verification output signal is displayable on the display.

13. The fingerprint sensor according to any of the previous claims, **characterized in that** at least one sensor area (5, 6) of the first and second sensor areas (5, 6) is a capacitive sensor area with capacitive sensor elements.

14. The fingerprint sensor according to any of the previous claims, **characterized in that** at least one sensor area (5, 6) of the first and second sensor areas (5, 6) is an optical sensor area, in particular with a light emitting illumination device and with light receiving sensor elements.

15. The fingerprint sensor according to any of the previous claims, **characterized in that** it further has a voltage source (7) integrated into the fingerprint sensor.

16. The fingerprint sensor according to any of the previous claims, **characterized in that** the voltage source (7) is adapted to be electrically coupled to at least one of the following elements: the first sensor area (5), the second sensor area (6), the evaluation device (3, 4) and the individual elements of the evaluation device (3, 4), in particular the extracting device, the verification device and the selection device.

17. The fingerprint sensor according to any of the previous claims, **characterized in that** it further has at least one communication device (2, 9) integrated into the fingerprint sensor (5, 6).

18. The fingerprint sensor according to any of the previous claims, **characterized in that** it has as a communication device (2, 9) an antenna (9) for contactless communication.

19. The fingerprint sensor according to any of the previous claims, **characterized in that** it has as a communication device (2, 9) a contact pad (2) for contact-type communication.

20. The fingerprint sensor according to any of the previous claims, having a connection for connecting the fingerprint sensor to an interface of a data processing device.

21. The fingerprint sensor according to any of the previous claims, **characterized in that** the sensor body (1) is a chip card body.

22. A method for detecting and processing at least one fingerprint with a fingerprint sensor, wherein a first fingerprint of a first finger is detected by means of a first sensor area (5) and a second fingerprint of a second finger is detected by means of a second sensor area (6), the first sensor area (5) and the second sensor area (6) being disposed at an angle from the angular range from 135 to 225° relative to each other, and the detected first fingerprint and the detected second fingerprint are relayed by means of a relaying device (8) to an evaluation device (3, 4) and characteristic data of the particular relayed detected fingerprint are extracted in the evaluation unit (3, 4), further in a verification unit of the evaluation device (3, 4), for the first and the second detected fingerprint in each case, the characteristic data of the detected fingerprint are compared with characteristic data of a reference fingerprint associated with the detected fingerprint that are stored in a memory of the evaluation device, and if the comparison shows that the characteristic data of the detected fingerprint match the characteristic data of the reference fingerprint according to predetermined match criteria, an affirmative comparison output signal is output by the evaluation device, and otherwise a negative comparison output signal is output by the evaluation device, and a verification output signal is output by the verification unit, **characterized in that** a user specifies in a switching device of the fingerprint sensor in what way the verification output signal is determined from comparison output signals of the first and second detected fingerprints, and the method is so designed that comparison output signals of both fingerprints are produced if the switching device specifies the necessity of both signals.

23. The method according to claim 22, **characterized in that** if at least one comparison output signal is affirmative, an affirmative verification output signal is output by the verification unit.

24. The method according to claim 22 or 23, **characterized in that** an affirmative verification output signal is output by the verification unit only in the case that both comparison output signals are affirmative.

25. The method according to any of the previous claims, **characterized in that** the comparison is performed at least partly by the pattern comparison method.

26. The method according to any of the previous claims, **characterized in that** the comparison is performed at least partly by the minutiae method.

27. The method according to any of the previous claims, **characterized in that** the angle is 180°.

28. The method according to any of the previous claims, **characterized in that** the detection of the first and second fingerprints is caused by placing the first finger on the first sensor area (5), placing the second finger on the second sensor area (6), and pressing with the first and second fingers the first and second sensor areas (5, 6) with a contact pressure such that an activation element disposed between the first sensor area (5) and the second sensor area (6) is activated to the effect that a first fingerprint of the first finger is detected with the first sensor area (5) and a second fingerprint of the second finger is detected with the second sensor area (6).

29. The method according to any of the previous claims, **characterized in that** as a check of whether the fingers are alive, the electrical conductivity is measured between the first finger and the second finger which are electrically coupled with each other via the first and second sensor areas (5, 6).

30. Use of the method according to any of claims 22 to 29 for identifying a person by at least one of his fingerprints.

## Revendications

1. Capteur d'empreintes digitales avec un corps de capteur (1), avec une première surface de capteur (5) pour la détection d'une première empreinte digitale et avec une seconde surface de capteur (6) pour la détection d'une seconde empreinte digitale, la première surface de capteur (5) et la seconde surface de capteur (6) étant disposées l'une par rapport à l'autre selon un angle de la plage angulaire de 135 à 225°, avec un dispositif de transfert (8) relié activement à au moins la première ou la seconde surface de capteur (5, 6) en vue de transférer au moins une première empreinte digitale détectée à au moins un dispositif d'évaluation (3, 4) pour évaluer l'empreinte digitale détectée, lequel comprend un dispositif de vérification pour vérifier au moins la première ou la seconde empreinte digitale, le dispositif de vérification comprenant un dispositif de comparaison relié activement à un dispositif de mémoire et à un dispositif d'extraction, lequel est prévu pour la comparaison de données caractéristiques d'au moins une empreinte digitale détectée à des données caractéristiques d'une empreinte digitale de référence enregistrée dans le dispositif de mémoire au niveau de leur concordance mutuelle et qui peut être émis par au moins un signal de sortie de comparaison, dans lequel capteur le dispositif de vérification comprend en outre une unité de décision de vérification par laquelle un signal de sortie de vérification peut être établi et émis en fonction de la valeur d'au moins un signal de sortie de comparaison, qui peut accepter deux valeurs différentes, à savoir une valeur affirmative et une valeur négative, **caractérisé en ce qu'**il comprend en outre un dispositif de commutation qui permet à un utilisateur de déterminer la manière dont le signal de sortie de vérification doit être établi à partir des signaux de sortie de comparaison de la première et de la seconde empreinte digitale détectée, et **en ce qu'**il est conçu de telle sorte que des signaux de sortie de comparaison des deux empreintes digitales soient produits, lorsque le dispositif de commutation décide de la nécessité des deux signaux.

2. Capteur d'empreintes digitales selon la revendication 1, **caractérisé en ce que** la valeur du signal de sortie de comparaison est affirmative, au cas où la concordance mutuelle des critères de concordance prédéfinis suffit, et sinon elle est négative.

3. Capteur d'empreintes digitales selon une des revendications précédentes, **caractérisé en ce que** l'angle est de 180°.

4. Capteur d'empreintes digitales selon une des revendications précédentes, **caractérisé en ce que** le dispositif de mémoire comprend :
- une première mémoire pour stocker des données caractéristiques d'une première empreinte digitale de référence et
- une seconde mémoire pour stocker des données caractéristiques d'une seconde empreinte digitale de référence,
et **en ce que** le dispositif de comparaison comprend :
- une première unité de comparaison pour comparer des données caractéristiques de la première empreinte digitale détectée par rapport à celles de la première empreinte digitale de référence et pour émettre un premier signal de sortie de comparaison, et
- une seconde unité de comparaison pour comparer des données caractéristiques de la seconde empreinte digitale détectée par rapport à celles de la seconde empreinte digitale de référence et pour émettre un second signal de sortie de comparaison.

5. Capteur d'empreintes digitales selon une des revendications précédentes, **caractérisé en ce que** le dispositif de transfert (8) comprend un élément d'activation disposé entre la première surface de capteur (5) et la seconde surface de capteur (6), lequel est relié activement à la première surface de capteur (5) et à la seconde surface de capteur (6), de telle sorte que, par un actionnement simultané, en particulier une pression simultanée, de la première et de la seconde surface de capteur (5, 6), la détection et le transfert d'au moins une empreinte digitale soient provoqués.

6. Capteur d'empreintes digitales selon une des revendications précédentes, **caractérisé en ce que** l'élément d'activation est un élément de fermeture dans un circuit électrique qui est fermé par l'actionnement simultané de la première et de la seconde surfaces de capteur (5, 6).

7. Capteur d'empreintes digitales selon une des revendications précédentes, **caractérisé en ce que** au moins un des éléments du dispositif d'évaluation, en particulier le dispositif d'extraction, le dispositif de vérification ou le dispositif de sélection, est activé par l'élément d'activation.

8. Capteur d'empreintes digitales selon une des revendications précédentes, **caractérisé en ce qu'**il comprend en outre un dispositif de mesure pour mesurer la conductivité électrique entre un premier doigt posé sur la première surface de capteur (5) et un second doigt posé sur la seconde surface de capteur (6).

9. Capteur d'empreintes digitales selon une des revendications précédentes, **caractérisé en ce qu'**il comprend en outre un affichage intégré dans le capteur d'empreintes digitales.

10. Capteur d'empreintes digitales selon une des revendications précédentes, **caractérisé en ce que** l'affichage est relié activement au dispositif de transfert (8), de sorte qu'au moins une empreinte digitale détectée puisse être visualisée sur l'affichage.

11. Capteur d'empreintes digitales selon une des revendications précédentes, **caractérisé en ce que** l'affichage est relié activement au dispositif d'extraction, de sorte que des données caractéristiques d'au moins une empreinte digitale détectée puissent être visualisées sur l'affichage.

12. Capteur d'empreintes digitales selon une des revendications précédentes, **caractérisé en ce que** l'affichage est relié activement au dispositif de vérification, de sorte qu'au moins un signal d'au moins un signal de sortie de comparaison et du signal de sortie de vérification puissent être visualisé sur l'affichage.

13. Capteur d'empreintes digitales selon une des revendications précédentes, **caractérisé en ce que** au moins une surface de capteur (5, 6) de la première et de la seconde surfaces de capteur (5, 6) est une surface de capteur capacitive avec des éléments de capteurs capacitifs.

14. Capteur d'empreintes digitales selon une des revendications précédentes, **caractérisé en ce qu'**au moins une surface de capteur (5, 6) de la première et de la seconde surface de capteur (5, 6) est une surface de capteur optique, en particulier avec un dispositif d'éclairage émettant de la lumière et des éléments de capteur recevant la lumière.

15. Capteur d'empreintes digitales selon une des revendications précédentes, **caractérisé en ce qu'**il comprend également une source de tension (7) intégrée dans le capteur d'empreintes digitales.

16. Capteur d'empreintes digitales selon une des revendications précédentes, **caractérisé en ce que** la source de tension (7) peut être couplée électriquement à au moins un des éléments suivants : la première surface de capteur (5), la seconde surface de capteur (6), le dispositif d'évaluation (3, 4) et les différents éléments du dispositif d'évaluation (3, 4), en particulier le dispositif d'extraction, le dispositif de vérification et le dispositif de sélection.

17. Capteur d'empreintes digitales selon une des revendications précédentes, **caractérisé en ce qu'**il comprend en outre au moins un dispositif de communication (2, 9) intégré dans le capteur d'empreintes digitales (5, 6).

18. Capteur d'empreintes digitales selon une des revendications précédentes, **caractérisé en ce qu'**il comprend, en tant que dispositif de communication (2, 9), une antenne (9) pour la communication sans contact.

19. Capteur d'empreintes digitales selon une des revendications précédentes, **caractérisé en ce qu'**il comprend, en tant que dispositif de communication (2, 9), un champ de contact (2) pour la communication avec contact.

20. Capteur d'empreintes digitales selon une des revendications précédentes, avec un raccord pour raccorder le capteur d'empreintes digitales à une interface d'un dispositif de traitement des données.

21. Capteur d'empreintes digitales selon une des revendications précédentes, **caractérisé en ce que** le corps de capteur (1) est un corps de cartes à puces.

22. Procédé pour détecter et traiter au moins une empreinte digitale avec un capteur d'empreintes digitales, dans lequel une première empreinte digitale d'un premier doigt est détectée au moyen d'une première surface de capteur (5), et une seconde empreinte digitale d'un second doigt est détectée au moyen d'une seconde surface de capteur (6), dans lequel procédé la première surface de capteur (5) et la seconde surface de capteur (6) sont disposées l'une par rapport à l'autre selon un angle situé dans la plage angulaire de 135 à 225°, et la première empreinte digitale détectée et la seconde empreinte digitale détectée sont transférées au moyen d'un dispositif de transfert (8) à un dispositif d'évaluation (3, 4), et des données caractéristiques de chaque empreinte digitale détectée transférée sont extraites dans l'unité d'évaluation (3, 4), de sorte que, dans une unité de vérification du dispositif d'évaluation (3, 4), respectivement pour la première et la seconde empreinte digitale détectée, les données caractéristiques de l'empreinte digitale détectée sont comparées aux données caractéristiques enregistrées dans une mémoire du dispositif d'évaluation d'une empreinte digitale de référence associée à l'empreinte digitale détectée, et si la comparaison indique que les données caractéristiques de l'empreinte digitale détectée selon les critères de concordance prédéfinis concordent avec les données caractéristiques de l'empreinte digitale de référence, un signal de sortie de comparaison affirmatif est émis par le dispositif d'évaluation, et dans l'autre cas un signal de sortie de comparaison négatif est émis par le dispositif d'évaluation, et un signal de sortie de vérification est émis par l'unité de vérification, **caractérisé en ce qu'**un utilisateur détermine dans un dispositif de commutation du capteur d'empreintes digitales la manière dont le signal de sortie de vérification est établi à partir des signaux de sortie de comparaison de la première et de la seconde empreinte digitale détectée, et **en ce que** le procédé est conçu de telle sorte que des signaux de sortie de comparaison des deux empreintes digitales soient produits, lorsque le dispositif de commutation décide de la nécessité des deux signaux.

23. Procédé selon la revendication 22, **caractérisé en ce que**, au cas où au moins un signal de sortie de comparaison est affirmatif, un signal de sortie de vérification affirmatif est émis par l'unité de vérification.

24. Procédé selon la revendication 22 ou 23, **caractérisé en ce qu'**un signal de sortie de vérification affirmatif est émis par l'unité de vérification uniquement si les deux signaux de sortie de comparaison sont affirmatifs.

25. Procédé selon une des revendications précédentes, **caractérisé en ce que** la comparaison est réalisée au moins partiellement selon le procédé de comparaison modèle.

26. Procédé selon une des revendications précédentes, **caractérisé en ce que** la comparaison est réalisée au moins partiellement selon le procédé minutieux.

27. Procédé selon une des revendications précédentes, **caractérisé en ce que** l'angle est de 180°.

28. Procédé selon une des revendications précédentes, **caractérisé en ce que** la détection de la première et de la seconde empreintes digitales est provoquée par le fait que le premier doigt est posé sur la première surface de capteur (5), que le second doigt est posé sur la seconde surface de capteur (6), et que la première et la seconde surfaces de capteur (5, 6) sont pressées avec le premier doigt et le second doigt avec une pression de contact telle qu'un élément d'activation disposé entre la première surface de capteur (5) et la seconde surface de capteur (6) est activé, de sorte qu'une première empreinte digitale du premier doigt soit détectée avec la première surface de capteur (5) et une seconde empreinte digitale du second doigt soit détectée avec la seconde surface de capteur (6).

29. Procédé selon une des revendications précédentes, **caractérisé en ce que**, pour vérifier si les doigts sont vivants, la conductivité électrique entre le premier doigt et le second doigt, qui sont couplés électriquement par la première et la seconde surfaces de capteur (5, 6), est mesurée.

30. Utilisation du procédé selon une des revendications 22 à 29 pour identifier une personne au moyen d'au moins une de ses empreintes digitales.
